# EUROPÄISCHE PATENTSCHRIFT

(11) **EP 3 019 563 B1**
(45) Veröffentlichungstag und Bekanntmachung des Hinweises auf die Patenterteilung: **07.12.2022**
(21) Anmeldenummer: 14739780.6
(22) Anmeldetag: 10.07.2014
(51) Int. Cl.: C09D 5/08, B05D 7/14, B05D 7/16, B05D 1/18

(54) **VERFAHREN ZUM BESCHICHTEN VON METALLISCHEN OBERFLÄCHEN VON SUBSTRATEN UND NACH DIESEM VERFAHREN BESCHICHTETE GEGENSTÄNDE**
METHOD FOR COATING METAL SURFACES OF SUBSTRATES AND OBJECTS COATED IN ACCORDANCE WITH SAID METHOD
PROCÉDÉ DE REVÊTEMENT DE SURFACES MÉTALLIQUES DE SUBSTRATS ET OBJETS REVÊTUS PAR LEDIT PROCÉDÉ

(30) Priorität: 10.07.2013 DE 102013213498
(43) Veröffentlichungstag der Anmeldung: 18.05.2016
(73) Patentinhaber: Chemetall GmbH, 60487 Frankfurt am Main (DE)
(72) Erfinder: WASSERFALLEN, Daniel, 55128 Mainz (DE); SCHWAMB, Michael, 60325 Frankfurt (DE); FRENKEL, Aliaksandr, 63067 Offenbach (DE); SOTKE, Vera, 65824 Schwalbach am Taunus (DE); BREMSER, Wolfgang, 33100 Paderborn (DE); DROLL, Martin, 33189 Schlangen (DE); SEEWALD, Oliver, 34431 Marsberg (DE); EILINGHOFF, Ron, 60487 Frankfurt (DE); GEROLD, Stephanie, 33102 Paderborn (DE); NIESEN, Evgenija, 59494 Soest (DE); SCHACHTSIEK, Lars, 33102 Paderborn (DE); TRAUT, Manuel, 59069 Hamm (DE)
(74) Vertreter: BASF IP Association
(86) Internationale Anmeldenummer: PCT/EP2014/064857
(87) Internationale Veröffentlichungsnummer: WO 2015/004256

(56) Entgegenhaltungen:
- WO-A1-2012/034974
- WO-A1-2013/117611
- WO-A1-2014/080007
- US-A- 5 534 082
- US-A1- 2006 270 578
- DATABASE WPI Week 201377 Thomson Scientific, London, GB; AN 2013-E39092 XP002730364, -& CN 102 787 312 A (UNIV DALIAN POLYTECHNIC) 21. November 2012 (2012-11-21)

## Beschreibung

Die Erfindung betrifft ein Verfahren zur Beschichtung von Oberflächen, eine entsprechende Beschichtung sowie die Verwendung der nach diesem Verfahren beschichteten Gegenstände. Es existieren zahlreiche Methoden, um auf insbesondere metallischen Oberflächen mittels Tauchverfahren homogene Beschichtungen zu erzeugen. Hierbei benutzt man für die Erzeugung von insbesondere Korrosionschutzbeschichtungen vorwiegend bestehend aus einer organischen Matrix oder/und organischen oder/und anorganischen Zusatzkomponenten vorzugsweise folgende Techniken.

Die klassischen Verfahren beruhen auf der Nutzung der rheologischen Eigenschaften der verwendeten Formulierungen, um eine vollständige Beschichtung eines gefügten Werkstückes zu erzielen. Obwohl durch kontinuierliches Rotieren des betreffenden Werkstückes nach dem Tauchvorgang eine Ansammlung von Beschichtungsmaterial an kritischen Stellen reduziert werden kann, ist es mit dieser Methode nicht möglich eine vollständig homogene Beschichtung zu erzielen. Zusätzlich können bei Stellen mit höheren Beschichtungsanteilen während des Trocknungs- oder/und Vernetzungsvorgangs Fehlstellen wie Blasenbildung und Kocher entstehen, die die Qualität der gesamten Beschichtung beeinträchtigen.

Die elektrophoretischen Verfahren vermeiden diese Problematik, indem elektrischer Strom eingesetzt wird, um eine gleichmäßige Beschichtung im Tauchen abzuscheiden. Mit dieser Methode gelingt die Erzeugung von homogenen Beschichtungen auf metallischen Werkstücken. Die abgeschiedenen Beschichtungen zeigen eine ausgesprochen gute Haftung im nassen Zustand zum metallischen Untergrund, was erlaubt ohne Ablösung der Beschichtung das Werkstück in einem nachfolgenden Spülschritt zu behandeln. Dies führt dazu, dass die vorab genannten schwer zugänglichen Stellen am Werkstück von überstehender Lackierlösung befreit werden und somit keine Fehlstellen während des Trocknungsvorgangs entstehen können. Diese Technik hat den Nachteil, dass neben der notwendigen Menge an elektrischer Energie und neben geeigneten Tauchbecken, die zu einer Erhöhung der Kosten führen, auch sogenannte Kantenfluchten auftreten, da elektrische Felder an makroskopischen Kanten inhomogen aufgebaut werden und die Kanten ungleichmäßig und eventuell auch unvollständig beschichtet werden. Bei dem Aufbau der Werkstücke müssen zudem Hohlräume vermieden werden, da an diesen Stellen ein Effekt vergleichbar mit dem Phänomen des Faraday'schen Käfigs auftritt. Aufgrund der Reduktion der zum Abscheiden notwendigen elektrischen Feldstärken kann an solchen Bereichen am Werkstück keine oder nur eine stark verringerte Beschichtung durch das Verfahren aufgebracht werden (Umgriffsproblematik), was zu einer Beeinträchtigung der Beschichtungsqualität führt. Zusätzlich weist diese Technik bei einer elektrischen Tauchlackierung (ETL) wie z.B. bei der kathodischen Tauchlackierung (KTL) die folgenden Nachteile auf: Ein entsprechendes Tauchbad ist zusammen mit allen elektrischen und mechanischen Einrichtungen von der Temperaturführung, Stromversorgung und elektrischen Isolierung, Umwälzeinrichtung und Zugabeeinrichtung bis zur Entsorgung der Anolyt-Säure, die bei der elektrolytischen Beschichtung entsteht, und mit einer Ultrafiltration zur Lackrezyklierung sowie Steuereinrichtungen sehr aufwendig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Die bekannten autophoretischen Verfahren beruhen auf einem stromlosen Konzept bestehend aus einem Beizangriff der eingesetzten Substratoberfläche, bei der Metallionen aus der Oberfläche herausgelöst werden und aufgrund der Konzentration an metallischen Ionen an der entstehenden Grenzfläche eine Emulsion koaguliert. Obwohl diese Verfahren nicht oben genannter Einschränkung der elektrolytischen Verfahren bezüglich dem Faraday'schen Käfigeffektes aufweisen, müssen die bei dem Prozess entstandenen Beschichtungen nach dem ersten Aktivierungsschritt in einem aufwendigen mehrstufigen Tauchverfahren fixiert werden. Desweiteren führt der Beizangriff zu einer unvermeidbaren Verunreinigung der aktiven Zone durch Metallionen, die aus den Zonen entfernt werden müssen. Zudem beruht die Methode auf einem chemischen Abscheidungsprozess, der nicht selbstregulierend ist und bei Bedarf nicht abgebrochen werden kann, wie z. B. durch das Ausschalten des elektrischen Stromes bei den elektrolytischen Verfahren. Somit ist bei einer längeren Verweildauer der metallischen Substrate in den aktiven Zonen die Ausbildung einer zu hohen Schichtstärke unvermeidbar.

Die WO 2013/117611 A1 beschreibt ein Verfahren zur Beschichtung von Oberflächen, wobei u.a.
einer Dispersion aus filmbildenden Polymeren ein anionischer Polyelektrolyt zugesetzt wird.

Die WO 2014/080007 A1 beschreibt ebenfalls ein Verfahren zur Beschichtung von Oberflächen, wobei u.a. einer Dispersion aus filmbildenden Polymeren ein anionischer Polyelektrolyt zugesetzt wird.

Die CN 102 787 312 A betrifft ein Chrom-freies Passivierungsoberflächenbehandlungsmittel zum Behandeln einer Oberfläche aus Aluminium vor dem Beschichten.

Die US 5 534 082 A beschreibt ein Verfahren zur Behandlung von Aluminium und Aluminiumlegierungen mit einer wässrigen flüssigen Zusammensetzung.

Die US 2006/270578 A1 offenbart eine Zusammensetzung für die Verhinderung von Rost auf einer Metalloberfläche.

Die WO 2012/034974 A1 betrifft ein Verfahren zum stromlosen Beschichten von Substraten.

Es ist ein lange verfolgter Wunsch, homogene Beschichtungen in einem Tauchprozess effizient und kostengünstig auszubilden, um hieraus möglichst geschlossene und im Wesentlichen ebene Beschichtungen in größerer Dicke herzustellen.

Es besteht daher die Aufgabe, ein Verfahren zum Beschichten von metallischen Oberflächen von Substraten umfassend die Schritte oder bestehend aus den Schritten:
I. Bereitstellen eines Substrats mit einer gereinigten, metallischen Oberfläche, die gegebenenfalls mit mindestens einer Beschichtung einer Vorbehandlungszusammensetzung vorbeschichtet ist,
II. Kontaktieren und Beschichten metallischen Oberflächen mit einer wässerigen Zusammensetzung in Form Dispersion oder/und Suspension,
III. gegebenenfalls Spülen der organischen Beschichtung und
IV. Trocknen oder/und Einbrennen der organischen Beschichtung oder gegebenenfalls Trocknen der organischen Beschichtung und Beschichten mit einer gleichartigen oder weiteren Beschichtungszusammensetzung vor einem Trocknen oder/und Einbrennen,
dadurch gekennzeichnet,
dass in Schritt II die Beschichtung mit einer wässerigen Zusammensetzung in Form Dispersion oder/und Suspension erfolgt, enthaltend 2,5 bis 45 Gew.-% mindestens eines nichtionisch stabilisierten Bindemittels und 0,1 bis 2,0 Gew.-% eines Gelbildners, wobei die wässerige Zusammensetzung einen pH-Wert im Bereich von 0,5 bis 7 aufweist sowie mit den in einer Vorbehandlungsstufe oder/und während der Kontaktierung im Schritt II aus der metallischen Oberfläche herausgelösten Kationen eine Beschichtung auf Basis eines ionogenen Gels ausbildet.

Die erfindungsgemäß eingesetzten nichtionisch stabilisierte Bindemittel werden an Hand nachfolgend beschriebenen Test ausgewählt:
1) Erstellung eines wässriges Gemisch aus vollentsalztem (VE)-Wasser, 0,5 Gew.-% des Gelbildners und 10 Gew.-% der zu untersuchenden Dispersion;
2) Einstellung des Gemisches mit Hilfe von Hexafluorozirkonsäure auf einen pH von 2 bis 3;
3) Tauchen eines gereinigten Substrats für 5 Minuten bei Raumtemperatur in vorstehend beschriebene Lösung;
4) im Falle einer Abscheidung so wird eine Gegenprüfung (ohne Gelbildner) durchgeführt, dazu man stellt ein Gemisch aus VE-Wasser und 10 Gew.-% der zu untersuchenden Dispersion her;
5) das unter 4) hergestellte Gemisch wird mittels Hexafluorozirkonsäure wieder auf einen pH von 2-3 eingestellt und
6) die unter 3) beschrieben Prüfung wird wiederholt.

Ergibt sich unter 3) eine organische Abscheidung auf dem Substrat und unter 6) (ohne Gelbildner) keine Abscheidung ist das nichtionisch stabilisierte Bindemittel für das erfindungsgemäße Verfahren geeignet.

Die erfindungsgemäße Beschichtung zeigt einen einschichtigen Aufbau, wobei entweder eine mehr oder weniger homogene Beschichtung oder eine Beschichtung ausgebildet wird bzw. vorliegen kann, bei der die Polymerpartikel sich nahe der metallischen Oberfläche etwas stärker anreichern.

Unter den zu beschichtenden Substrate mit metallischer Oberfläche werden erfindungsgemäß verstanden: Metalle, metallisch beschichtete Oberflächen oder mit Primern vorbehandelte Metalloberflächen, aus denen Metallkationen noch herausgelöst werden können. Insbesondere umfasst der Begriff "zu beschichtende Oberfläche(n)" im Sinne dieser Anmeldung Oberflächen von metallischen Gegenständen oder/und metallischen Partikeln, die gegebenenfalls z.B. mit einer metallischen Beschichtung wie z.B. auf Basis von Zink oder Zinklegierung oder/und mit mindestens einer Beschichtung einer Vorbehandlungs- oder Behandlungszusammensetzung wie z.B. auf Basis von Chromat, Cr³⁺, Ti-Verbindung, Zr-Verbindung, Silan/Silanol/Siloxan/Polysiloxan oder/und organisches Polymer vorbeschichtet sein können.

Unter den metallischen Werkstoffen sind grundsätzlich alle Arten von metallischen Werkstoffen möglich, insbesondere solche aus Aluminium, Eisen, Kupfer, Titan, Zink, Zinn oder/und Legierungen mit einem Gehalt an Aluminium, Eisen, Stahl, Kupfer, Magnesium, Nickel, Titan, Zink oder/und Zinn, wobei deren Einsatz auch benachbart oder/und nacheinander erfolgen kann. Die Werkstoffoberflächen können gegebenenfalls auch vorbeschichtet werden oder/und sein, beispielsweise mit Zink oder einer Aluminium oder/und Zink enthaltenden Legierung.

Als zu beschichtende Gegenstände können grundsätzlich alle Arten von Gegenständen eingesetzt werden, die aus einem metallischen Werkstoff bestehen oder mit mindestens einer metallischen Beschichtung versehen sind. Besonders bevorzugte Gegenstände sind insbesondere Bänder (Coils), Bleche, Teile wie z.B. Kleinteile, gefügte Komponenten, kompliziert geformte Komponenten, Profile, Stäbe oder/und Drähte.

Der Begriff "stromloses Beschichten" im Sinne dieser Anmeldung bedeutet, dass beim Beschichten mit der Lösung oder/und Dispersion (= Suspension oder/und Emulsion) enthaltenden Zusammensetzung im Gegensatz zu den bekannten elektrolytischen Verfahren zur Herstellung der Folgebeschichtung von außen eine elektrische Spannung kleiner 100 V angelegt wird.

Vorzugsweise betrifft die Erfindung ein Verfahren, bei dem der Gelbildner **a)** mindestens ein Polysacchariden auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; **b)** mindestens ein Gelbildner natürlichen Ursprungs auf Basis von Polyaminosäuren, Kollagenen, Polypeptiden, Ligninen und/oder **c)** mindestens ein synthetischer Gelbildner auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen enthält oder daraus besteht.

Besonders bevorzugt enthält oder besteht der Gelbildner aus mindestens ein Polysaccharid auf Basis von Pektinen und/oder Gellan Gum.

Vorzugsweise ist das erfindungsgemäße Verfahren eines, bei dem die wässerige Zusammensetzung oder/und die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Al, B, Ba, Ca, Cr, Co, Cu, Fe, Hf, In, K, Li, Mg, Mn, Mo, Na, Nb, Ni, Pb, Sn, Ta, Ti, V, W, Zn oder/und Zr.

(Der Begriff "Copolymere" im Sinne dieser Anmeldung beschreibt Polymere, die aus zwei oder mehr verschiedenartigen Monomereinheiten zusammengesetzt sind. Hierbei können Copolymere in fünf Klassen unterteilt werden, wie anhand eines binären Copolymers, das aus zwei verschiedenen Comonomeren A und B aufgebaut ist, veranschaulicht wird:
1. Statistische Copolymere, in denen die Verteilung der beiden Monomeren in der Kette zufällig ist (AABABBBABAABBBABBABAB....);
2. Gradient-Copolymere, prinzipiell den statistischen Copolymeren ähnlich, jedoch mit veränderlichem Anteil eines Monomers im Verlauf der Kette (AAAAAABAABBAABABBBAABBBBBB);
3. Alternierende oder abwechselnde Copolymere mit einer regelmäßigen Anordnung der Monomeren entlang der Kette (ABABABABABABABABABAB....);
4. Blockcopolymere, die aus längeren Sequenzen oder Blöcken jedes Monomers besteht (AAAAAAAAABBBBBBBBBBBB...), wobei je nach Anzahl der Blöcke man auch von Diblock-, Triblock-, Multiblock-Copolymeren spricht;
5. Pfropfcopolymere, bei denen Blöcke eines Monomers auf das Gerüst (Rückgrat) eines anderen Monomers aufgepfropft sind.

Der Begriff "Derivate" im Sinne dieser Anmeldung bezeichnet einen abgeleiteten Stoff ähnlicher Struktur zu einer entsprechenden Grundsubstanz. Derivate sind Stoffe, deren Moleküle an Stelle eines H-Atoms oder einer funktionellen Gruppe ein anderes Atom oder eine andere Atomgruppe besitzen bzw. bei denen ein oder mehrere Atome/Atomgruppen entfernt wurden.

Der Begriff "Polymer(e)" im Sinne dieser Anmeldung bedeutet Monomer(e), Oligomer(e), Polymer(e), Copolymer(e), Blockcopolymer(e), Pfropfcopolymer(e), deren Gemische und deren Compoundierungen auf organischer oder/und im Wesentlichen organischer Basis. Üblicherweise liegt/liegen die "Polymer(e)" im Sinne dieser Anmeldung vorwiegend oder gänzlich als Polymer(e) oder/und Copolymer(e) vor.

Besonders bevorzugt ist das erfindungsgemäße Verfahren eines, bei dem die wässerige Zusammensetzung oder/und die hieraus hergestellte organische Beschichtung einen Gehalt an filmbildenden Bindemitteln auf Basis von Polyacrylaten, Polyurethanen, Polyepoxiden und/oder deren Hybriden aufweist. Sogenannte Polyacrylat-Polyurethan Hybridharze können vom Typ unterschieden werden in Hybridsysteme, die durch reines Vermischen der verschiedenen Dispersionen erzeugt werden (Blends oder Formulierungen), in solche, die eine chemische Verbindung zwischen den unterschiedlichen Polymerarten aufweisen und in solche, in denen die unterschiedlichen Polymerklassen interpenetrierende Netzwerke (IPN) ausbilden.

Üblicherweise werden solche Polyurethan-Polyacrylat-Hybriddispersionen durch Emulsionspolymerisation eines Vinylolymerisats ("Polyacrylat") in einer wässrigen Polyurethandispersion hergestellt. Es ist aber auch möglich, die Polyurethan-Polyacrylat-Hybriddispersion als Sekundärdispersion herzustellen.

Wässrige Polyacrylat-Polyepoxid Hybriddispersionen werden üblicherweise durch Additionsreaktionen eines bifunktionellen Epoxids mit bifunktionellen Aminmonomerbausteinen und anschließender Reaktion mit einem Polyacrylat mit ausreichenden Carboxylfunktionen hergestellt. Die Wasserdispergierbarkeit kann wie bei den Polyurethansekundärdispersionen dabei z.B. durch Carboxylatgruppen, die mit Aminen in anionische Gruppen überführt wurden und anschließender Dispergierung in Wasser erzielt werden.

Hybriddispersionen zur Ausbildung einer Schicht auf dem Substrat können neben Polyurethan- und Polyepoxid-Bestandteilen bevorzugt auch organische Polymere und/oder Copolymere auf Basis von Polyvinylalkoholen, Polyvinylacetaten Polybutylacrylaten und/oder anderen Acrylsäureester enthalten. Acrylsäureester sind Ester, die sich von der Acrylsäure (CH₂=CH-COOH) ableiten und damit die funktionelle Gruppe (CH₂=CH-COOR) tragen. In großen Mengen werden unter anderem Acrylsäuremethylester, Acrylsäureethylester, Acrylsäurebutylester und Ethylhexylacrylat produziert. Die Hauptanwendung von Acrylsäureestern liegt in Homo- und Copolymeren, die z. B. Acrylsäure, Acrylamiden, Methacrylaten, Acrylnitril, Fumarsäuren, Itaconsäure, Maleaten, Vinylacetat, Vinlychlorid, Styrol, Butadien und ungesättigten Polyestern, Polyepoxidestern, Polyacrylamiden, Polyacrylsäuren, Polycarbonaten, Polyestern, Polyethern, Polystyrolbutadienen, Poly(meth)acrylsäureestern, Polyinylacetatcopolymeren mit Acrylsäureestern und/oder Copolymeren mit Dibutylmaleinat und/oder mit Vinylestern von mindestens einer Koch-Säure, Polyethylenen, Polyvinylchloriden, Polyacrylnitrilen, Polyepoxiden, Polyurethanen, Polyacrylaten, Polymethacrylaten, Polyestern, Polyamiden, Polytetrafluorethylenen, Polyisobutadienen, Polyisoprenen, Silikonen, Silikonkautschuken und/oder deren Derivaten enthalten. Diese sind insbesondere zu mindestens 50 Gew.-% der Fest- und Wirkstoffe in der wässerigen Zusammensetzung enthalten.

Der Begriff "Vorbehandlung" bedeutet eine Behandlung (= Kontaktieren der zu beschichtenden Oberflächen mit einer üblicherweise flüssigen Zusammensetzung), bei der anschließend, gegebenenfalls nach einem nachfolgenden Beschichten, eine weitere Beschichtung zum Schützen der Schichtabfolge und des Gegenstandes wie z.B. mindestens ein Lack aufgebracht wird.

Bei einer vorherigen Vorbehandlung vor einer Aktivierung einer Oberfläche mit einem Aktivierungsmittel, das helfen soll, die Oberfläche elektrostatisch aufzuladen, können die zu behandelnden Oberflächen bei Bedarf zuerst alkalisch gereinigt und gegebenenfalls mit einer Zusammensetzung zur Vorbehandlung kontaktiert werden, letzteres insbesondere um eine Konversionsschicht auszubilden. Dann können die derart behandelten oder/und beschichteten Oberflächen gegebenenfalls mit einem Primer oder/und mit einer gegebenenfalls umformbaren Schutzschicht, insbesondere mit einem Korrosionsschutzprimer, beschichtet oder/und gegebenenfalls beölt werden. Die Beölung dient insbesondere dem vorübergehenden Schutz der behandelten oder/und beschichteten insbesondere metallischen Oberflächen.

Als Vorbehandlung ist grundsätzlich jede Art der Vorbehandlung möglich: Es können beispielsweise wässerige Vorbehandlungszusammensetzungen auf Basis von Phosphat, Phosphonat, Silan/Silanol/Siloxan/Polysiloxan, Lanthanidverbindung, Titanverbindung, Hafniumverbindung, Zirkoniumverbindung Säure, Metallsalz oder/und organischem Polymer eingesetzt werden.

Bei der weiteren Behandlung dieser beschichteten Substrate kann bei Bedarf unabhängig davon, ob davor Öl aufgebracht worden ist oder nicht, eine insbesondere alkalische Reinigung erfolgen.

Eine Beschichtung mit einem Korrosionsschutzprimer wie z.B. einem Schweißprimer kann zusätzlichen Korrosionsschutz insbesondere in Hohlräumen und schlecht zugänglichen Partien eines Substrats, Umformbarkeit oder/und Fügbarkeit z.B. beim Falzen, Kleben oder/und Schweißen ermöglichen. In der industriellen Praxis könnte ein Korrosionsschutzprimer insbesondere dann eingesetzt werden, wenn das damit beschichtete Substrat wie z.B. ein Blech nach der Beschichtung mit dem Korrosionsschutzprimer geformt oder/und mit einer weiteren Komponente gefügt wird und wenn weitere Beschichtungen erst danach aufgebracht werden. Wenn in diesem Verfahrensgang zusätzlich ein Korrosionsschutzprimer unter der Aktivierungsschicht und unter der Polymerbeschichtung aufgebracht wird, wird üblicherweise ein deutlich verbesserter Korrosionsschutz erzeugt.

Der Begriff "im Wesentlichen spülfest" im Sinne dieser Anmeldung bedeutet, dass unter den Bedingungen der jeweiligen Anlage und Verfahrensabfolge die jeweils letzte Beschichtung durch einen Spülvorgang (= Spülen) nicht gänzlich entfernt wird, so dass eine Beschichtung hergestellt werden kann, vorzugsweise eine geschlossene Beschichtung.

Bei dem erfindungsgemäßen Verfahren können als Partikel die unterschiedlichsten Partikelarten, Partikelgrößen und Partikelformen verwendet werden.

Als Partikel in der wässerigen Zusammensetzung zum Ausbilden der Schicht können vorzugsweise Oxide, Hydroxide, Carbonate, Phosphate, Phosphosilicate, Silicate, Sulfate, organische Polymere inklusive Copolymeren und deren Derivaten, Wachse und/oder compoundierte Partikel, insbesondere solche auf Basis von Korrosionsschutzpigmenten, organischen Polymeren, Wachsen und/oder compoundierten Partikeln, verwendet werden und/oder deren Gemische. Sie weisen vorzugsweise Partikelgrößen auf im Bereich von 5 nm bis 15 µm, von 8 nm bis 5 µm, oder von 15 nm bis 1,5 µm, insbesondere von 30 nm bis 700 nm oder von 50 nm bis 500 nm. Sie sind vorzugsweise wasserunlösliche Partikel.

Compoundierte Partikel weisen in einem Partikel ein Gemisch von mindestens zwei verschiedenen Substanzen auf. Compoundierte Partikel können oft andere Substanzen mit sehr unterschiedlichen Eigenschaften aufweisen. Sie können beispielsweise teilweise oder gänzlich die Zusammensetzung für einen Lack enthalten, gegebenenfalls sogar mit einem Gehalt an nichtpartikulär ausgebildeten Substanzen wie z.B. Tensid, Entschäumer, Dispergiermittel, Lackhilfsmittel, weitere Arten Additive, Farbstoff, Korrosionsinhibitor, schwach wasserlöslichem Korrosionsschutzpigment oder/und andere Substanzen, die für entsprechende Mischungen üblich oder/und bekannt sind. Solche Lackbestandteile können beispielsweise für organische Beschichtungen zum Umformen, für Korrosionsschutzprimer und andere Primer, für Farblacke, Füller oder/und Klarlacke geeignet oder/und häufig genutzt sein.

Ein Korrosionsschutzprimer weist üblicherweise elektrisch leitfähige Partikel auf und ist elektrisch schweißbar. Generell ist es hierbei vielfach bevorzugt, dass a) ein Gemisch chemisch oder/und physikalisch verschiedenartiger Partikel, b) Partikel, Aggregate oder/und Agglomerate aus chemisch oder/und physikalisch verschiedenartigen Partikeln oder/und c) compoundierten Partikeln in der Zusammensetzung oder/und in der hieraus gebildeten Partikelschicht verwendet werden.

Vielfach ist es bevorzugt, dass die Partikel enthaltende Zusammensetzung oder/und die hieraus gebildete Partikelschicht neben mindestens einer Art von Partikeln auch mindestens eine nichtpartikuläre Substanz enthält/enthalten, insbesondere Additive, Farbstoffe, Korrosionsinhibitoren oder/und schwach wasserlösliche Korrosionsschutzpigmente. Es können insbesondere als Partikel in der Zusammensetzung oder/und in der hieraus gebildeten Partikelschicht farbige oder/und gegebenenfalls auch ein begrenzter Anteil an elektrisch leitfähigen Partikeln insbesondere auf Basis von Fullerenen und anderen Kohlenstoffverbindungen mit Graphit-ähnlichen Strukturen oder/und Russ, gegebenenfalls auch Nanocontainer oder/und Nanoröhren enthalten sein. Andererseits können hierbei insbesondere als Partikel in der Zusammensetzung oder/und in der hieraus gebildeten Beschichtung beschichtete Partikel, chemisch oder/und physikalisch modifizierte Partikel, Kern-Schale-Partikel, compoundierte Partikel aus verschiedenartigen Substanzen, verkapselte Partikel oder/und Nanocontainer verwendet werden.

Bei dem erfindungsgemäßen Verfahren ist es bevorzugt, dass die Partikel enthaltende Zusammensetzung, die hieraus gebildete Partikelschicht oder/und die hieraus z.B. durch Verfilmen oder/und Vernetzen gebildete Beschichtung neben mindestens einer Art von Partikeln auch jeweils mindestens einen Farbstoff, ein Farbpigment, ein Korrosionsschutzpigment, einen Korrosionsinhibitor, ein Leitfähigkeitspigment, eine weitere Art an Partikeln, ein Silan/Silanol/Siloxan/ Polysiloxan/Silazan/Polysilazan, ein Lackadditiv oder/und ein Additiv wie z.B. jeweils mindestens ein Tensid, einen Entschäumer oder/und ein Dispergiermittel, enthält/enthalten.

Bei dem erfindungsgemäßen Verfahren ist es bevorzugt, dass die Zusammensetzung oder/und die hieraus gebildete Beschichtung neben mindestens einer Art von Partikeln und gegebenenfalls neben mindestens einer nicht-partikulären Substanz teilweise oder vollständig eine chemische Zusammensetzung für einen Primer, einen Lack wie beispielsweise für einen Füller, Decklack oder/und Klarlack aufweist.

Als Zusätze zu den organischen Polymeren der Partikel empfehlen sich in vielen Ausführungsformen Pigmente oder/und Additive, wie sie in Lacken oder/und Primern häufig verwendet werden.

Eine Filmbildung lässt sich durch den Einsatz thermoplastischer Polymere oder/und durch Zusatz von Substanzen, die als temporäre Weichmacher dienen, verbessern. Filmbildungshilfsmittel wirken als spezifische Lösemittel, die die Oberfläche der Polymerteilchen erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Ferner ist es vorteilhaft, wenn auch ausreichend lange während des Trockenprozesses ein Restwassergehalt vorhanden ist.

Insbesondere vorteilhaft als Filmbildungshilfsmittel sind sogenannte langkettige Alkohole, insbesondere solche mit 4 bis 20 C-Atomen,
wie ein Butandiol,
ein Butylglykol,
ein Butyldiglykol,
ein Ethylenglykolether wie Ethylenglykolmonobutylether,
Ethylenglykolmonoethylether,
Ethylenglykolmonomethylether,
Ethylglykolpropylether,
Ethylenglykolhexylether,
Diethylenglykolmethylether,
Diethylenglykolethylether,
Diethylenglykolbutylether,
Diethylenglykolhexylether oder ein
Polypropylenglykolether wie
Propylenglykolmonomethylether,
Dipropylenglykolmonomethylether,
Tripropylenglykolmonomethylether,
Propylenglykolmonobutylether,
Dipropylenglykolmonobutylether,
Tripropylenglykolmonobutylether,
Propylenglykolmonopropylether,
Dipropylenglykolmonopropylether,
Tripropylenglykolmonopropylether,
Propylenglykolphenylether,
Trimethylpentandioldiisobutyrat,
ein Polytetrahydrofuran,
ein Polyetherpolyol oder/und ein Polyesterpolyol.

Eine Vernetzung kann beispielsweise mit bestimmten reaktiven Gruppen wie z.B. Isocyanat-, Isocyanurat-, Phenol- oder/und Melamingruppen erfolgen.

Vorzugsweise wird die Folgebeschichtung in einer Weise getrocknet, dass insbesondere vorhandene organische Polymerpartikel verfilmen können, so dass eine weitgehend oder vollständig homogene Beschichtung gebildet wird. Die Trockentemperaturen können dabei in manchen Ausführungsformen so hoch gewählt werden, dass die organischen polymeren Bestandteile vernetzen können.

Bei dem erfindungsgemäßen Verfahren ist es in etlichen Ausführungsformen bevorzugt, dass eine im Wesentlichen organische Partikel enthaltende Partikelschicht ausgebildet und beispielsweise beim Trocknen verfilmt oder/und vernetzt wird. Das Verfilmen erfolgt in manchen Ausführungsformen auch ohne Anwesenheit von Filmbildungshilfsmitteln. Hierbei können die Partikel der Beschichtung, insbesondere wenn sie vorwiegend oder gänzlich als organische Polymere vorliegen, vorzugsweise zu einem im Wesentlichen geschlossenen oder zu einer geschlossenen Beschichtung verfilmt werden, insbesondere beim Trocknen. Hierbei ist es oft bevorzugt, dass die Trocknungstemperatur einer Beschichtung, die vorwiegend oder gänzlich aus organischen Polymeren bestehen, so gewählt wird, dass eine im Wesentlichen geschlossene oder eine geschlossene Beschichtung gebildet wird. Bei Bedarf kann zum Verfilmen mindestens ein Filmbildungshilfsmittel zugesetzt werden, insbesondere auf Basis von mindestens einem langkettigen Alkohol. Bei Ausführungsformen mit mehreren Partikelschichten übereinander werden vorzugsweise erst alle Partikelschichten aufgebracht und danach gemeinsam verfilmt oder/und vernetzt.

Der Gehalt an mindestens einem Filmbildungshilfsmittel kann in der wässerigen Zusammensetzung - insbesondere im Bad - vorzugsweise 0,01 bis 50 g/L bezogen auf Feststoffe einschließlich Wirkstoffen, besonders bevorzugt 0,08 bis 35 g/L, ganz besonders bevorzugt 0,2 bis 25 g/L oder 0,5 bis 16 g/L, insbesondere 1 bis 12 g/L oder 4 bis 6 g/L betragen. Das Gewichtsverhältnis der Gehalte an organischem Filmbildner zu Gehalten an Filmbildungshilfsmitteln in der wässerigen Zusammensetzung - insbesondere im Bad - kann in weiten Bereichen schwanken; insbesondere kann es bei ≤ (100 : 0,1) liegen. Vorzugsweise liegt dieses Verhältnis im Bereich von 100 : 10 bis 100 : 0,2 oder von 100 : 2,5 bis 100 : 0,6, besonders bevorzugt im Bereich von 100 : 2 bis 100 : 0,75 oder von 100 : 1,4 bis 100 : 1.

Hierbei ist es vielfach bevorzugt, dass das Trocknen, Verfilmen oder/und Vernetzen im Temperaturbereich von 50 bis 260°C erfolgt, besonders bevorzugt im Temperaturbereich von 120 bis 220°C bezogen auf die Ofentemperatur oder/und bezogen auf Peak-Metal-Temperature (PMT). Der gewählte Temperaturbereich ist weitgehend von der Art und Menge der organischen und gegebenenfalls auch der anorganischen Bestandteile und gegebenenfalls auch von ihren Filmbildungstemperaturen oder/und Vernetzungstemperaturen abhängig.

Vorzugsweise betrifft die Erfindung ein Verfahren, bei dem die wässerige Zusammensetzung oder/und die hieraus hergestellte organische Beschichtung einen Gehalt an mindestens einem Komplexbildner für Metallkationen oder einem Polymer, welches Metallkationen komplexierend modifiziert ist, aufweist.

Besonders bevorzugt ist das erfindungsgemäße Verfahren eines, bei dem die wässerige Zusammensetzung oder/und die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

Vorteilhafter Weise weist die wässerige Zusammensetzung oder/und die hieraus hergestellte organische Beschichtung einen Gehalt an mindestens einem Emulgator auf.

Besonders bevorzugt ist, dass die wässerige Zusammensetzung oder/und die hieraus hergestellte organische Beschichtung einen Gehalt an mindestens einem Emulgator ausgewählt aus solchen auf Basis von anionischen Emulgatoren aufweist.

Vorzugsweise enthält die wässerige Zusammensetzung oder/und die hieraus hergestellte organische Beschichtung ein Gemisch aus mindestens zwei verschiedenen anionischen Polyelektrolyten.

Besonders bevorzugt enthält die wässerige Zusammensetzung oder/und die hieraus hergestellte organische Beschichtung ein Gemisch aus zwei Pektinen.

Weiterhin bevorzugt enthält die wässerige Zusammensetzung oder/und die hieraus hergestellte organische Beschichtung als Gelbildner mindestens ein anionisches Polysaccharid ausgewählt aus solchen mit einem Veresterungs- und/oder Amidierungsgrad der Carboxyfunktion im Bereich von 1 bis 75 % bezogen auf die Gesamtzahl der Alkohol- und Carboxygruppen.

Ganz besonders bevorzugt enthält die wässerige Zusammensetzung oder/und die hieraus hergestellte organische Beschichtung als Gelbildner mindestens ein anionisches Polysaccharid oder/und mindestens einen anionischen Polyelektrolyten ausgewählt aus solchen, mit einem Molekulargewicht im Bereich von 500 bis 1000000 g/mol⁻¹.

Besonders bevorzugt ist in dem erfindungsgemäßen Verfahren, dass die anionischen Polyelektrolyte modifiziert werden oder modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

Vorteilhafter Weise werden als Kationen, die aus der metallischen Oberfläche herausgelöst werden/sind oder/und die der wässerigen Zusammensetzung zugesetzt werden/sind, Al, Cu, Fe, Mg oder/und Zn ausgewählt.

Die wässerige Zusammensetzung enthält vorzugsweise weiterhin einen Vernetzer ausgewählt aus der Gruppe bestehend aus: Silanen, Siloxanen, Phenolharztypen oder Aminen in einer Menge von 0,01 g/L bis 50 g/L.

Besonders bevorzugt enthält die wässerige Zusammensetzung einen Vernetzer ausgewählt aus der Gruppe besteht aus: Silanen, Siloxanen, Phenolharztypen oder Aminen in einer Menge von 0,01 g/L bis 50 g/L.

In weiterer Ausgestaltung der Erfindung enthält die wässerige Zusammensetzung komplexe Titan- und /oder Zirkonfluoride in einer Menge von 0,001 g/L bis 500 g/L.

Besonders bevorzugt enthält die wässerige Zusammensetzung komplexe Titan- und /oder Zirkonfluoride in einer Menge von 0,01 g/L bis 75 g/L.

Ganz besonders bevorzugt enthält die wässerige Zusammensetzung oder/und die hieraus hergestellte organische Beschichtung weiterhin mindestens ein Additiv ausgewählt aus Additiven bestehend aus der Gruppe von Entschäumern, Bioziden, Dispergierhilfsmitteln, Filmbildungshilfmitteln, saure oder/und basische Hilfsmittel zum Einstellen des pH-Werts und Verdicker und Verlaufsmittel.

Ganz besonders bevorzugt werden vor dem Kontaktieren und Beschichten der metallischen Oberflächen mit einer wässerigen Zusammensetzung in Verfahrensstufe II. die metallischen Oberflächen gereinigt, gebeizt oder/und vorbehandelt.

Vorteilhafter Weise bildet die wässerige Zusammensetzung eine Beschichtung auf Basis eines ionogenen Gels aus, bei dem der dabei oder später ausgebildete Trockenfilm eine Dicke von mindestens 1 µm aufweist.

Besonders bevorzugt wird die organische Beschichtung in 0,05 bis 20 Minuten im Tauchbad ausgebildet und weist nach dem Trocknen eine Trockenfilmdicke im Bereich von 5 bis 100 µm auf.

Beschrieben wird weiterhin eine wässerige Zusammensetzung, enthaltend 2,5 bis 45 Gew.-% mindestens eines nichtionisch stabilisierten Bindemittels und 0,1 bis 2,0 Gew.-% eines Gelbildners, wobei die wässerige Zusammensetzung einen pH-Wert im Bereich von 0,5 bis 7 aufweist.

Vorzugsweise ist die wässrige Zusammensetzung eine die in der Dispersion aus filmbildenden Polymeren einen Gehalt an organischen Partikeln auf Basis von Polyacrylaten, Polyurethanen, Polyepoxiden und/oder deren Hybriden, einen Gehalt an mindestens einem Komplexbildner ausgewählt aus solchen auf Basis von Maleinsäure, Alendronsäure, Itaconsäure, Citraconsäure oder Mesaconsäure oder Anhydriden oder Halbestern dieser Carbonsäuren und mindestens einen anionischen Polyelektrolyten auf Basis von Pektinen oder Gellan Gum aufweist.

Es hat sich gezeigt, dass aus den erfindungsgemäß beschichteten Oberflächen anschließend im Wesentlichen geschlossene oder geschlossene Beschichtungen mit einer Schichtdicke im Bereich von 1 µm bis 250 µm hergestellt werden können, insbesondere im Bereich von 3 µm bis 100 µm oder von 5 µm bis 50 µm. Entsprechende Schichtdicken können die einzelnen Beschichtungen vor oder/und nach ihrer Verfilmung oder/und vor ihrer Vernetzung aufweisen.

Es hat sich gezeigt, dass die erfindungsgemäß beschichteten Oberflächen, aus denen anschließend im Wesentlichen geschlossene oder geschlossene Beschichtungen hergestellt wurden, auf deutlich einfachere und deutlich kostengünstigere Weise hergestellt werden konnten als beispielsweise Elektrotauchlack-, autophoretischen Tauchlack- oder Pulverlackbeschichtungen.

Ferner hat es sich gezeigt, dass derartige erfindungsgemäß hergestellte Beschichtungen Elektrotauchlack-, autophoretischen Tauchlack- oder Pulverlackbeschichtungen der heutigen industriellen Praxis in ihren Eigenschaften gleichwertig sein können, wenn entsprechend chemisch zusammengesetzte, insbesondere Formulierungen eingesetzt werden.

Es wurde überraschend festgestellt, dass das erfindungsgemäße Verfahren, das kein oder im Wesentlichen kein elektrolytisches Verfahren ist, auch in dem Fall, dass es mit elektrischer Spannung geringfügig unterstützt wird, und es daher üblicherweise kein Anlegen einer äußeren elektrischen Spannung bedarf, in einfacher Weise und ohne aufwendige Steuerung betrieben werden kann. Dieses Verfahren kann in einem weiten Temperaturbereich und auch bei Raumtemperatur eingesetzt werden, wenn von der nachfolgenden Trocknung abgesehen wird.

Es wurde überraschend festgestellt, dass bei dem erfindungsgemäßen Verfahren bezüglich der Aufbringung des Aktivierungsmittels keine aufwendigen Steuerungsmaßnahmen erforderlich sind, um eine gleichmäßige und homogene Beschichtung zu erzielen, und dass bei geringem Chemikalienverbrauch hochwertige schützende Folgebeschichtungen gebildet werden, die eine Dicke im Bereich von 500 nm bis 30 µm erreichen.

Es wurde überraschend festgestellt, dass es sich bei dem erfindungsgemäßen Verfahren bezüglich der Abscheidung insbesondere der Folgebeschichtung um ein selbstregulierendes Verfahren handelt, bei dem keine aufwendigen Steuermaßnahmen erforderlich sind und bei geringem Chemikalienverbrauch hochwertige schützende Beschichtungen gebildet werden.

Es wurde überraschend festgestellt, dass die erfindungsgemäß abgeschiedenen Folgebeschichtungen eine homogene Schicht mit einer gleichmäßigen Trockenschichtdicke auf einem komplex geformten Werkstück ausbildeten, vergleichbar mit der Qualität einer herkömmlich elektrophoretisch oder autophoretisch abgeschiedenen Lackschicht.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt. Die Verwendung des erfindungsgemäßen Verfahrens ist besonders bevorzugt zur Beschichtung von Substraten, die Probleme bei der Beschichtung mit einem Elektrotauchlack bereitet haben.

Die Erfindung wird nachfolgend an Hand von 16 Ausführungsbeispielen und 2 Vergleichsbeispielen näher erläutert. Dabei wurden als Substrate in Schritt I eingesetzt:
I.
   1: Elektrolytisch verzinktes Stahlblech mit einer Zink-Schichtauflage von 5µm, Blechdicke 0,81 mm;
   2: Kaltgewalzter Stahl, Blechdicke ca. 0,8 mm:
   3: Aluminiumlegierung der Güteklasse AC 170, Blechdicke ca. 1,0 mm und folgende generellen Behandlungsschritte durchgeführt:
II. Alkalische Reinigung:
   30 g/L Gardoclean^{®} S 5176 und 4 g/L Gardobond^{®} Additiv H 7406 der Chemetall GmbH in Trinkwasser nach DIN 2000 angesetzt. Die Bleche wurden 180 s im Spritzen bei 60 °C gereinigt und anschließend 120 s mit Trinkwasser und 120 s mit deionisiertem Wasser im Tauchen gespült.
III.
   1. Vorbehandlung auf Zinkphosphat-Basis (Gardobond 26S der Firma Chemetall GmbH)
   2. Vorbehandlung auf Silanbasis (Oxsilan 9810/2 der Firma Chemetall GmbH)

Alle Mischungen wurden mittels Tauchen bei Raumtemperatur innerhalb von 5 Minuten auf das jeweilige Substrat appliziert.

Die pH Werte der gesamten Formulierung wurden mittels wässriger Lösungen von Phosphorsäure (10%) und Ammoniak (10%) eingestellt.

### Bindemittel

### 1: Dispersion A

Nichtionisch stabilisierte Dispersion mit einem Festkörpergehalt von 50-54%, einem pH von 5,0-6,0, einer Viskosität von 1500 - 3000 mPas und einer Dichte von 1,079 g/cm3. Die Tabellenangaben beziehen sich auf die Menge der Lösung pro Liter Formulierung und dem resultierenden Festkörpergehalt bezogen auf die Formulierung.

### 2: Dispersion B

Nichtionisch stabilisierte Dispersion mit einem Festkörpergehalt von 50-54%, einem pH von 5,0-6,0, einer Viskosität von 300 - 1500 mPas und einer Dichte von 1,079 g/cm3. Die Tabellenangaben beziehen sich auf die Menge der Lösung pro Liter Formulierung und dem resultierenden Festkörpergehalt bezogen auf die Formulierung.

### 3: Dispersion C

Anionisch stabilisierte Polyacrylat-Dispersion mit einem Festkörpergehalt von 40 %, einem pH von 3,0-5,0, einer Viskosität von 500 - 3000 mPas, einer Dichte von 1,04 g/cm3, einer Partikelgrösse von ca. 160 nm und einer OH-Zahl von ca. 25 mg KOH/g (Festharz). Die Tabellenangaben beziehen sich auf die Menge der Lösung pro Liter Formulierung und dem resultierenden Festkörpergehalt bezogen auf die Formulierung.

### Gelbildner

Als Gelbildner wurde ein 1:1-Gemisch von einem Polysaccharid mit einem Molekulargewicht von ungefähr 70'000 g/mol, einem Amidierungsgrad von 11%, einem Veresterungsgrad von 41%, einem Epoxydierungsgrad von 0%, einem Galakturonsäuregehalt von 88% und einem Polysaccharid mit einem Molekulargewicht von ungefähr 70'000 g/mol, einem Amidierungsgrad von 0%, einem Veresterungsgrad von 38%, einem Epoxydierungsgrad von 0%, einem Galakturonsäuregehalt von 85% verwendet. Zur Erstellung der Formulierung verwendete man eine 2 %ige wässrige Lösung des Polysaccharids. Die Tabellenangaben beziehen sich auf die Menge der Lösung pro Liter Formulierung.

### Additive

1: Zum Einsatz kam Hexafluorotitansäure als wässrige Lösung (20%). Die Tabellenangaben beziehen sich auf die Menge der Lösung pro Liter Formulierung.
2: Zum Einsatz kam Hexafluorozirkonsäure als wässrige Lösung (20%). Die Tabellenangaben beziehen sich auf die Menge der Lösung pro Liter Formulierung.
3: Zum Einsatz kam 3-(Triethoxysilyl)-propylamin (AMEO). Die Tabellenangaben beziehen sich auf die Menge pro Liter Formulierung.

### Pigmente

1: Gasruss-RCC-Pigmentkonzentrat auf Basis eines Dispergierharzes für Anwendungen in wässrigen Beschichtungssystemen mit pH-Werten im sauren Bereich mit einem Pigment-Gehalt von 30%, einem Festkörpergehalt von 38% und einer Dichte von 1,17 g/cm³
2: Anorganisch beschichtetes Weisspigment auf Basis eines Titandioxid-Rutils mit einem Titandioxid Gehalt von 92%
3: Mikronisiertes Weißpigment auf Basis eines Titandioxid-Rutils, anorganisch und organisch beschichtet.

### Entschäumer

1: Entschäumer auf Basis von Naturölen, Emulgatoren und einem Gehalt von 1 Gew.-% der Lieferform in Wasser. Die Tabellenangaben beziehen sich auf die Menge der Lösung pro Liter Formulierung.

### IV: Spülen der organischen Beschichtung:

Das Spülen nach der organischen Beschichtung dient dazu, um nicht haftende Bestandteile der Formulierung und Anhäufungen der Formulierung zu entfernen und den Verfahrensgang wie in der Automobilindustrie üblich so realitätsnah wie möglich zu gestalten. Denn in der Automobilindustrie erfolgt das Spülen mit Wasser üblicherweise entweder durch ein Tauchspülen oder ein Spritzspülen.

### V: Trocknen oder/und Vernetzen der Beschichtung:

Trocknung oder Trocknung unter Verfilmung insbesondere der organischen polymeren Bestandteile:
175 °C für 15 Minuten

Parallele Untersuchungen mit Wirbelstrom-Messgerät und Rasterelektronenmikroskopie (REM) verdeutlichten, dass erfindungsgemäß Beschichtungen ausgebildet wurden, aus denen weitgehend geschlossene oder geschlossene Beschichtungen durch Kontaktieren der Oberflächen mit Dispersionen oder/und Formulierungen gebildet werden konnten.

### Beispiel 1

Substrat 1 wurde mit einer Mischung bestehend aus 10 % Gew.-% bezogen auf die gesamte Menge des resultierenden Gemisches der Dispersion A und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 2 eingestellt. Es wurde eine Trockenfilmdicke von 20-30 µm gemessen mit einem Wirbelstrom-Messgerät und REM ermittelt.

### Beispiel 2

Versuch 1 wurde mit Substrat 2 wiederholt und eine Trockenfilmdicke von 10-20 µm mit REM ermittelt.

### Beispiel 3

Substrat 1 wurde mit einer Mischung bestehend aus 10 % Gew.-% bezogen auf die gesamte Menge des resultierenden Gemisches der Dispersion A und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 4 eingestellt. Die Substrat 1 wurde gemäß III.1. durch Phosphatieren vorbehandelt. Es wurde eine Trockenfilmdicke von 7-10 µm gemessen mit einem Wirbelstrom-Messgerät und REM ermittelt.

### Beispiel 4

Versuch 3 wurde mit Substrat 2 wiederholt und eine Trockenfilmdicke gleichfalls von 7-10 µm mit REM ermittelt.

### Beispiel 5

Substrat 1 wurde mit einer Mischung bestehend aus 10 % Gew.-% bezogen auf die gesamte Menge des resultierenden Gemisches der Dispersion A und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 4 eingestellt. Die Substrat 1 wurde gemäß III.2. mit einem Silan vorbehandelt. Es wurde eine Trockenfilmdicke von 7-10 µm gemessen mit einem Wirbelstrom-Messgerät und REM ermittelt.

### Beispiel 6

Versuch 5 wurde mit Substrat 2 wiederholt und eine Trockenfilmdicke gleichfalls von 7-10 µm mit REM ermittelt.

### Beispiel 7

Substrat 1 wurde mit einer Mischung bestehend aus 5 % Gew.-% bezogen auf die gesamte Menge des resultierenden Gemisches der Dispersion A und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 2 eingestellt. Es wurde eine Trockenfilmdicke von 10-15 µm gemessen mit einem Wirbelstrom-Messgerät und REM ermittelt.

### Beispiel 8

Versuch 7 wurde mit Substrat 2 wiederholt und eine Trockenfilmdicke gleichfalls von 8-12 µm mit REM ermittelt.

### Beispiel 9

Substrat 1 wurde mit einer Mischung bestehend aus 10 % Gew.-% bezogen auf die gesamte Menge des resultierenden Gemisches der Dispersion B und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 4 eingestellt. Es wurde eine Trockenfilmdicke von 5-8 µm gemessen mit einem Wirbelstrom-Messgerät und REM ermittelt.

### Beispiel 10

Versuch 9 wurde mit Substrat 2 wiederholt und eine Trockenfilmdicke gleichfalls von 8-12 µm mit REM ermittelt.

### Beispiel 11

Substrat 1 wurde mit einer Mischung bestehend aus 10 % Gew.-% bezogen auf die gesamte Menge des resultierenden Gemisches der Dispersion A und 0,5 % Gew.-% des Gelbildners bezogen auf die gesamte Menge des resultierenden Gemisches beschichtet. Die Mischung wurde falls notwendig vor Benutzung mit Säure, vorzugsweise Salpeter- und/oder Phosphorsäure auf einen pH von 2 eingestellt. Als Additiv wurden 0,4 g/L Hexafluorotitansäure zugesetzt. Es wurde eine Trockenfilmdicke von 35-40 µm gemessen mit einem Wirbelstrom-Messgerät und REM ermittelt.

### Beispiel 12

Versuch 11 wurde mit Substrat 2 wiederholt und eine Trockenfilmdicke gleichfalls von 20-25 µm mit REM ermittelt.

### Beispiel 13

Versuch 11 wurde mit Substrat 3 wiederholt und eine Trockenfilmdicke gleichfalls von 3-5 µm mit REM ermittelt.

### Beispiel 14 - 15

Analog zu den Beispielen 11 bis 13 wurden die Substrate 1 bis 3 beschichtet mit dem Unterschied, dass an Stelle von 0,4 g/L Hexafluorotitansäure 0,4 g/L Hexafluorozirkonsäure zugesetzt wurde. Es wurden eine Trockenfilmdicke von 8-10 µm für die Substrate 1 und 2 sowie 3-5 µm für Substrat 3 gemessen mit einem Wirbelstrom-Messgerät und REM ermittelt.

### Beispiele 16 - 19

Analog zu den Beispielen 11 bis 13 wurden die Substrate 1 bis 3 beschichtet mit dem Unterschied, dass als Additiv zusätzlich zu 0,4 g/L Hexafluorotitansäure und 3 g/L AMEO zugesetzt wurde. Es wurden eine Trockenfilmdicke von 30-35 µm für Substrate 1, 15-20 µm für Substrat 2 sowie 3-5 µm für Substrat 3 gemessen mit einem Wirbelstrom-Messgerät und REM ermittelt.

### Beispiel 20 - 23

Analog zu den Beispielen 11 bis 13 wurden die Substrate 1 bis 3 beschichtet mit dem Unterschied, dass als Additiv zusätzlich zu 0,4 g/L Hexafluorozirkonsäure und 3 g/L AMEO zugesetzt wurde. Es wurden eine Trockenfilmdicke von 8-10 µm für die Substrate 1 und 2 sowie 3-5 µm für Substrat 3 gemessen mit einem Wirbelstrom-Messgerät und REM ermittelt.

### Beispiele 24 - 26

Analog zu den Beispielen 11 bis 13 wurden die Substrate 1 bis 3 beschichtet mit dem Unterschied, dass als Additiv zusätzlich zu 0,4 g/L Hexafluorotitansäure, 3 g/L AMEO, 3 g/L Gasruss-Pikment und 5 g/L Entschäumer zugesetzt wurde. Es wurden eine Trockenfilmdicke von 30-35 µm für Substrate 1, 15-20 µm für Substrat 2 sowie 3-5 µm für Substrat 3 gemessen mit einem Wirbelstrom-Messgerät und REM ermittelt.

Die mikroskopischen Aufnahmen zeigen durchweg eine homogene Schichtbildung, was auf ein verlässliches, selbst regulierendes und gut kontrollierbares Beschichtungsverfahren hinweist.

## Patentansprüche

1. Verfahren zum Beschichten von metallischen Oberflächen von Substraten umfassend die Schritte oder bestehend aus den Schritten:
I. Bereitstellen eines Substrats mit einer gereinigten, metallischen Oberfläche, die gegebenenfalls mit mindestens einer Beschichtung einer Vorbehandlungszusammensetzung vorbeschichtet ist,
II. Kontaktieren und Beschichten der metallischen Oberflächen mit einer wässerigen Zusammensetzung in Form einer Dispersion oder/und Suspension,
III. gegebenenfalls Spülen der organischen Beschichtung und
IV. Trocknen oder/und Einbrennen der organischen Beschichtung oder
V. gegebenenfalls Trocknen der organischen Beschichtung und Beschichten mit einer gleichartigen oder weiteren Beschichtungszusammensetzung vor einem Trocknen oder/und Einbrennen,
**dadurch gekennzeichnet,**
**dass** in Schritt II die Beschichtung mit einer wässerigen Zusammensetzung in Form einer Dispersion oder/und Suspension erfolgt, enthaltend 2,5 bis 45 Gew.-% mindestens eines nichtionisch stabilisierten Bindemittels und 0,1 bis 2,0 Gew.- % eines Gelbildners, wobei die wässerige Zusammensetzung einen pH-Wert im Bereich von 0,5 bis 7 aufweist sowie mit den in einer Vorbehandlungsstufe oder/und während der Kontaktierung im Schritt II aus der metallischen Oberfläche herausgelöste Kationen eine Beschichtung auf Basis eines ionogenen Gels ausbildet.

2. Verfahren nach Anspruch 1, **dadurch gekennzeichnet, dass** der Gelbildner **a)** mindestens ein Polysaccharid auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; **b)** mindestens ein anionischen Polyelektrolyten natürlichen Ursprungs auf Basis von Polyaminosäuren, Kollagenen, Polypeptiden, Ligninen und/oder **c)** mindestens einen synthetischen anionischen Polyelektrolyten auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen enthält oder daraus besteht.

3. Verfahren nach Anspruch 1 oder 2, **dadurch gekennzeichnet, dass** der Gelbildner mindestens ein Polysaccharid auf Basis von Pektinen und/oder Gellan Gum enthält oder daraus besteht.

4. Verfahren nach einem oder mehreren der vorherigen Ansprüche, **dadurch gekennzeichnet, dass** die wässerige Zusammensetzung oder/und die hieraus hergestellte organische Beschichtung mindestens ein anionisches Polysaccharid ausgewählt aus solchen mit einem Veresterungs- und/oder Amidierungsgrad der Carboxyfunktion im Bereich von 1 bis 75 % bezogen auf die Gesamtzahl der Alkohol- und Carboxygruppen enthält.

5. Verfahren nach einem oder mehreren der vorherigen Ansprüche, **dadurch gekennzeichnet, dass** die wässerige Zusammensetzung oder/und die hieraus hergestellte organische Beschichtung mindestens ein anionisches Polysaccharid oder/und mindestens einen anionischen Polyelektrolyten ausgewählt aus solchen mit einem Molekulargewicht im Bereich von 500 bis 1000000 g/mol enthält.

6. Verfahren nach einem oder mehreren der vorherigen Ansprüche, **dadurch gekennzeichnet, dass** die nichtionisch stabilisierten Bindemittel modifiziert sind mit Haftung vermittelnden Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

7. Verfahren nach einem oder mehreren der vorherigen Ansprüche, **dadurch gekennzeichnet, dass** die wässerige Zusammensetzung oder/und die hieraus hergestellte organische Beschichtung einen Gehalt an mindestens einem Komplexbildner für Metallkationen oder einem Polymer, welches mit Metallkationen komplexierend modifiziert ist, aufweist.

8. Verfahren nach Anspruch 7, **dadurch gekennzeichnet, dass** die wässerige Zusammensetzung oder/und die hieraus hergestellte organische Beschichtung einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweist.

9. Verfahren nach einem oder mehreren der vorherigen Ansprüche, **dadurch gekennzeichnet, dass** die wässerige Zusammensetzung oder/und die hieraus hergestellte organische Beschichtung mindestens eine Art von Kationen enthält, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Salzen von Al, B, Ba, Ca, Cr, Co, Cu, Fe, Hf, In, K, Li, Mg, Mn, Mo, Na, Nb, Ni, Pb, Sn, Ta, Ti, V, W, Zn oder/und Zr.

10. Verfahren nach Anspruch 9, **dadurch gekennzeichnet, dass** als Kationen, die aus der metallischen Oberfläche herausgelöst werden/sind oder/und die der wässerigen Zusammensetzung zugesetzt werden/sind, Al, Cu, Fe, Mg oder/und Zn ausgewählt werden.

11. Verfahren nach einem oder mehreren der vorherigen Ansprüche, **dadurch gekennzeichnet, dass** die wässerige Zusammensetzung einen Vernetzer ausgewählt aus der Gruppe bestehend aus: Silanen, Siloxanen, Phenolharztypen oder Aminen in einer Menge von 0,01 g/L bis 50 g/L enthält.

12. Verfahren nach Anspruch 14, **dadurch gekennzeichnet, dass** die wässerige Zusammensetzung ein aminofunktionalisiertes Silan in einer Menge von 0,1 g/L bis 30 g/L enthält.

13. Verfahren nach einem oder mehreren der vorherigen Ansprüche, **dadurch gekennzeichnet, dass** die wässerige Zusammensetzung komplexe Titan- und /oder Zirkonfluoride in einer Menge von 0,01 g/L bis 100 g/L enthält.

14. Verfahren nach Anspruch 13, **dadurch gekennzeichnet, dass** die wässerige Zusammensetzung komplexe Titan- und /oder Zirkonfluoride in einer Menge von 0,1 g/L bis 10 g/L enthält.

15. Verfahren nach einem oder mehreren der vorherigen Ansprüche, **dadurch gekennzeichnet, dass** die wässerige Zusammensetzung mindestens ein Additiv ausgewählt aus der Gruppe bestehend aus: Entschäumern, Pigmenten, Bioziden, Dispergierhilfsmitteln, Filmbildungshilfmitteln, saure oder/und basische Hilfsmittel zum Einstellen des pH-Werts und Verdicker und Verlaufsmittel enthält.

16. Verfahren nach einem oder mehreren der vorherigen Ansprüche, **dadurch gekennzeichnet, dass** die organische Beschichtung in 0,05 bis 20 Minuten im Tauchbad ausgebildet wird und nach dem Trocknen eine Trockenfilmdicke im Bereich von 5 bis 100 µm aufweist.

## Claims

1. A method for coating metallic surfaces of substrates, comprising or consisting of the steps of:
I. supplying a substrate having a cleaned metallic surface optionally precoated with at least one coating of a pretreatment composition,
II. contacting and coating the metallic surfaces with an aqueous composition in the form of a dispersion and/or suspension,
III. optionally rinsing the organic coating and
IV. drying and/or baking the organic coating or
V. optionally drying the organic coating and carrying out coating with a similar or additional coating composition before drying and/or baking,
wherein
in step II the coating takes place with an aqueous composition in the form of a dispersion and/or suspension comprising 2.5 to 45 wt% of at least one nonionically stabilized binder and 0.1 to 2.0 wt% of a gelling agent, where the aqueous composition has a pH in the range from 0.5 to 7 and forms a coating based on an ionogenic gel with the cations dissolved out of the metallic surface in a pretreatment stage and/or during the contacting in step II.

2. The method according to claim 1, wherein the gelling agent comprises or consists of **a)** at least one polysaccharide based on glycogens, amyloses, amylopectins, calloses, agar, algins, alginates, pectins, carrageenans, celluloses, chitins, chitosans, curdlans, dextrans, fructans, collagens, gellan gum, gum arabic, starches, xanthans, tragacanth, karayans, tara gums and glucomannans; **b)** at least one anionic polyelectrolyte of natural origin, based on polyamino acids, collagens, polypeptides, lignins and/or **c)** at least one synthetic anionic polyelectrolyte based on polyamino acids, polyacrylic acids, polyacrylic acid copolymers, acrylamide copolymers, lignins, polyvinyl sulfonic acid, polycarboxylic acids, polyphosphoric acids or polystyrenes.

3. The method according to claim 1 or 2, wherein the gelling agent comprises or consists of at least one polysaccharide based on pectins and/or gellan gum.

4. The method according to one or more of the preceding claims, wherein the aqueous composition and/or the organic coating produced from it comprises at least one anionic polysaccharide selected from those with a degree of esterification and/or amidation of the carboxyl function in the range from 1 to 75%, based on the total number of alcohol and carboxy groups.

5. The method according to one or more of the preceding claims, wherein the aqueous composition and/or the organic coating produced from it comprises at least one anionic polysaccharide and/or at least one anionic polyelectrolyte selected from those having a molecular weight in the range from 500 to 1,000,000 g/mol.

6. The method according to one or more of the preceding claims, wherein the nonionically stabilized binders are modified with adhesion-promoting adhesive groups, selected from the group consisting of chemical groups of multifunctional epoxides, isocyanates, primary amines, secondary amines, tertiary amines, quaternary amines, amides, imides, imidazoles, formamides, Michael reaction products, carbodiimides, carbenes, cyclic carbenes, cyclocarbonates, multifunctional carboxylic acids, amino acids, nucleic acids, methacrylamides, polyacrylic acids, polyacrylic acid derivatives, polyvinyl alcohols, polyphenols, polyols having at least one alkyl and/or aryl radical, caprolactam, phosphoric acids, phosphoric acid esters, epoxide esters, sulfonic acids, sulfonic acid esters, vinyl sulfonic acids, vinyl phosphonic acids, catechol, silanes, and also the silanols and/or siloxanes formed from them, triazines, thiazoles, thiazines, dithiazines, acetals, hemiacetals, quinones, saturated fatty acids, unsaturated fatty acids, alkyds, esters, polyesters, ethers, glycols, cyclic ethers, crown ethers, anhydrides, and also of acetyl acetones and of beta-diketo groups, carbonyl groups and hydroxyl groups.

7. The method according to one or more of the preceding claims, wherein the aqueous composition and/or the organic coating produced from it contains an amount of at least one complexing agent for metal cations or a polymer modified for complexing with metal cations.

8. The method according to claim 7, wherein the aqueous composition and/or the organic coating produced from it contains an amount of at least one complexing agent selected from those based on maleic acid, alendronic acid, itaconic acid, citraconic acid or mesaconic acid or the anhydrides or hemiesters of these carboxylic acids.

9. The method according to one or more of the preceding claims, wherein the aqueous composition and/or the organic coating produced from it comprises at least one type of cations selected from those based on salts with a cationic effect, selected from the group consisting of melamine salts, nitroso salts, oxonium salts, ammonium salts, salts with quaternary nitrogen cations, salts of ammonium derivatives and salts of Al, B, Ba, Ca, Cr, Co, Cu, Fe, Hf, In, K, Li, Mg, Mn, Mo, Na, Nb, Ni, Pb, Sn, Ta, Ti, V, W, Zn and/or Zr.

10. The method according to claim 9, wherein Al, Cu, Fe, Mg and/or Zn is/are selected as cations that are/have been dissolved out of the metallic surface and/or that are/have been added to the aqueous composition.

11. The method according to one or more of the preceding claims, wherein the aqueous composition comprises a crosslinking agent selected from the group consisting of: silanes, siloxanes, phenolic resin types or amines in an amount of 0.01 g/l to 50 g/l.

12. The method according to claim 14, wherein the aqueous composition comprises an amino-functionalized silane in an amount of 0.1 g/l to 30 g/l.

13. The method according to one or more of the preceding claims, wherein the aqueous composition comprises complex titanium and/or zirconium fluorides in an amount of 0.01 g/l to 100 g/l.

14. The method according to claim 13, wherein the aqueous composition comprises complex titanium and/or zirconium fluorides in an amount of 0.1 g/l to 10 g/l.

15. The method according to one or more of the preceding claims, wherein the aqueous composition comprises at least one additive selected from the group consisting of: defoaming agents, pigments, biocides, dispersion aids, film-forming aids, acidic and/or basic auxiliaries for adjusting the pH, and thickeners and flow control agents.

16. The method according to one or more of the preceding claims, wherein the organic coating is formed in 0.05 to 20 minutes in an immersion bath and has a dry film thickness in the range from 5 to 100 µm after drying.

## Revendications

1. Procédé pour le revêtement de surfaces métalliques de substrats comprenant les étapes ou constitué par les étapes :
I. mise à disposition d'un substrat pourvu d'une surface métallique, nettoyée qui est éventuellement prérevêtue par au moins un revêtement d'une composition de prétraitement,
II. mise en contact et revêtement des surfaces métalliques avec une composition aqueuse sous forme d'une dispersion ou/et suspension,
III. éventuellement rinçage du revêtement organique et
IV. séchage et/ou cuisson du revêtement organique ou
V. éventuellement séchage du revêtement organique et revêtement par une composition de revêtement du même type ou différente avant un séchage et/ou une cuisson,
**caractérisé en ce que** dans l'étape II, le revêtement est réalisé avec une composition aqueuse sous forme d'une dispersion ou/et suspension, contenant 2,5 à 45 % en poids d'au moins un liant stabilisé non ionique et 0,1 à 2,0 % en poids d'un agent gélifiant, la composition aqueuse présentant une valeur de pH dans la plage de 0,5 à 7 et formant un revêtement à base d'un gel ionogène avec les cations dissous de la surface métallique dans une étape de prétraitement ou/et pendant la mise en contact dans l'étape II.

2. Procédé selon la revendication 1, **caractérisé en ce que** l'agent gélifiant contient a) au moins un polysaccharide à base de glycogènes, d'amyloses, d'amylopectines, de calloses, d'agar, d'algines, d'alginates, de pectines, de carraghénanes, de celluloses, de chitines, de chitosanes, de curdlanes, de dextranes, de fructanes, de collagènes, de gomme gellane, de gomme arabique, d'amidons, de xanthanes, de gomme adragante, de carayanes, de farines de graines de tara et de glucomannanes ; b) au moins un polyélectrolyte anionique d'origine naturelle à base de polyaminoacides, de collagènes, de polypeptides, de lignines, et/ou c) au moins un polyélectrolyte anionique synthétique à base de polyaminoacides, de poly(acide acrylique), de copolymères de poly(acide acrylique), de copolymères d'acrylamide, de lignines, de poly(acide vinylsulfonique), de poly(acide carboxylique), de poly(acide phosphorique) ou de polystyrènes, ou en est constitué.

3. Procédé selon la revendication 1 ou 2, **caractérisé en ce que** l'agent gélifiant contient au moins un polysaccharide à base de pectines et/ou de gomme gellane ou en est constitué.

4. Procédé selon l'une ou plusieurs des revendications précédentes, **caractérisé en ce que** la composition aqueuse ou/et le revêtement organique préparé à partir de celle-ci contient au moins un polysaccharide anionique choisi parmi ceux dotés d'un degré d'estérification et/ou d'amidation de la fonction carboxy dans la plage de 1 à 75 % par rapport au nombre total de groupes alcool et carboxy.

5. Procédé selon l'une ou plusieurs des revendications précédentes, **caractérisé en ce que** la composition aqueuse ou/et le revêtement organique préparé à partir de celle-ci contient au moins un polysaccharide anionique ou/et au moins un polyélectrolyte anionique choisi parmi ceux dotés d'un poids moléculaire dans la plage de 500 à 1 000 000 g/mole.

6. Procédé selon l'une ou plusieurs des revendications précédentes, **caractérisé en ce que** les liants stabilisés non ioniques sont modifiés par des groupes adhérents procurant de l'adhérence choisis dans le groupe constitué par des groupes chimiques d'époxydes multifonctionnels, d'isocyanates, d'amines primaires, d'amines secondaires, d'amines tertiaires, d'amines quaternaires, d'amides, d'imides, d'imidazoles, de formamides, de produits de réaction de Michael, de carbodiimides, de carbènes, de carbènes cycliques, de cyclocarbonates, d'acides carboxyliques multifonctionnels, d'acides aminés, d'acides nucléiques, de méthacrylamides, de poly(acide acrylique), de dérivés de poly(acide acrylique), de poly(alcool vinylique), de polyphénols, de polyols comportant au moins un radical alkyle et/ou aryle, de caprolactame, d'acides phosphoriques, d'esters phosphoriques, d'esters d'époxydes, d'acides sulfoniques, d'esters sulfoniques, d'acides vinylsulfoniques, d'acides vinylphosphoniques, de catéchol, de silanes ainsi que les silanols et/ou siloxanes formés à partir de ceux-ci, de triazines, de thiazoles, de thiazines, de dithiazines, d'acétals, hémi-acétals, quinones, acides gras saturés, d'acides gras insaturés, d'alkydes, d'esters, de polyesters, d'éthers, de glycols, d'éthers cycliques, d'éthers couronnes, d'anhydrides, ainsi que d'acétylacétones et de groupes bêta-dicéto, de groupes carbonyle et de groupes hydroxy.

7. Procédé selon l'une ou plusieurs des revendications précédentes, **caractérisé en ce que** la composition aqueuse ou/et le revêtement organique préparé à partir de celle-ci présente une teneur en au moins un agent de complexation pour des cations métalliques ou un polymère qui est modifié par complexation avec des cations métalliques.

8. Procédé selon la revendication 7, **caractérisé en ce que** la composition aqueuse ou/et le revêtement organique préparé à partir de celle-ci présente une teneur en au moins un agent de complexation choisi parmi ceux à base d'acide maléique, d'acide alendronique, d'acide itaconique, d'acide citraconique ou d'acide mésaconique ou les anhydrides ou les demi-esters de ces acides carboxylique.

9. Procédé selon l'une ou plusieurs des revendications précédentes, **caractérisé en ce que** la composition aqueuse ou/et le revêtement organique préparé à partir de celle-ci contient au moins une sorte de cations choisis parmi ceux à base de sels à effet cationique choisis dans le groupe constitué par des sels de mélamine, des sels de nitroso, des sels oxonium, des sels d'ammonium, des sels avec des cations d'azote quaternaire, des sels de dérivés d'ammonium et des sels de Al, B, Ba, Ca, Cr, Co, Cu, Fe, Hf, In, K, Li, Mg, Mn, Mo, Na, Nb, Ni, Pb, Sn, Ta, Ti, V, W, Zn ou/et Zr.

10. Procédé selon la revendication 9, **caractérisé en ce qu'**en tant que cations qui sont dissous de la surface métallique ou/et qui sont ajoutés à la composition aqueuse, sont choisis parmi Al, Cu, Fe, Mg ou/et Zn.

11. Procédé selon l'une ou plusieurs des revendications précédentes, **caractérisé en ce que** la composition aqueuse contient un agent de réticulation choisi dans le groupe constitué par : des silanes, des siloxanes, des types de résines phénoliques ou des amines en une quantité de 0,01 g/L à 50 g/L.

12. Procédé selon la revendication 14, **caractérisé en ce que** la composition aqueuse contient un silane fonctionnalisé par amino en une quantité de 0,1 g/L à 30 g/L.

13. Procédé selon l'une ou plusieurs des revendications précédentes, **caractérisé en ce que** la composition aqueuse contient des fluorures complexes de titane et/ou de zirconium en une quantité de 0,01 g/L à 100 g/L.

14. Procédé selon la revendication 13, **caractérisé en ce que** la composition aqueuse contient des fluorures complexes de titane et/ou de zirconium en une quantité de 0,1 g/L à 10 g/L.

15. Procédé selon l'une ou plusieurs des revendications précédentes, **caractérisé en ce que** la composition aqueuse contient au moins un additif choisi dans le groupe constitué par : des antimousses, des pigments, des biocides, des auxiliaires de dispersion, des auxiliaires de formation de film, des auxiliaires acides ou/et basiques pour l'ajustement de la valeur de pH et des épaississants et des agents nivelants.

16. Procédé selon l'une ou plusieurs des revendications précédentes, **caractérisé en ce que** le revêtement organique est formé en 0,05 à 20 minutes dans un bain d'immersion et présente après le séchage une épaisseur de film sec dans la plage de 5 à 100 pm.
